# EUROPÄISCHE PATENTSCHRIFT

(11) **EP 3 693 567 B1**
(45) Veröffentlichungstag und Bekanntmachung des Hinweises auf die Patenterteilung: **25.10.2023**
(21) Anmeldenummer: 19209659.2
(22) Anmeldetag: 18.11.2019
(51) Int. Cl.: F01P 3/18, B60K 11/02, F01N 3/10, B60K 11/04, F01P 1/00, F01P 5/02, F01P 5/04

(54) **LANDWIRTSCHAFTLICHE ARBEITSMASCHINE**
AGRICULTURAL MACHINE
ENGIN DE TRAVAIL AGRICOLE

(30) Priorität: 06.02.2019 DE 102019000845
(43) Veröffentlichungstag der Anmeldung: 12.08.2020
(73) Patentinhaber: CLAAS Selbstfahrende Erntemaschinen GmbH, 33428 Harsewinkel (DE)
(72) Erfinder: von Teschenhausen-Uckelmann, Ulrich, 48231 Warendorf (DE)
(74) Vertreter: CLAAS Gruppe

(56) Entgegenhaltungen:
- EP-A1- 1 496 214
- EP-A1- 2 757 233
- DE-A1-102009 023 771
- DE-A1-102014 208 545
- US-A1- 2004 129 407

## Beschreibung

Die vorliegende Erfindung betrifft eine landwirtschaftliche Arbeitsmaschine wie etwa einen Traktor, einen Mähdrescher oder einen Feldhäcksler, und zwar in erster Linie eine zur Kühlung von Aggregaten der Arbeitsmaschine verwendete Lüftereinheit.

Um bei einem Traktor, bei dem ein Motor typischerweise in einem auf einem Fahrgestell vor einer Fahrerkanzel angeordneten Gehäuse untergebracht ist, Abwärme des Motors abzuführen, ist herkömmlicherweise meist in dem Gehäuse vor dem Motor eine Lüftereinheit vorgesehen, die Frischluft über Öffnungen in einer Stirnseite des Gehäuses einsaugt, um sie innerhalb des Gehäuses durch einen Kühler des Motors zu leiten. Infolge der Platzierung der Öffnungen an der Stirnseite begünstigt der Fahrtwind den Zutritt der Frischluft ins Gehäuse. Um eine ausreichende Kühlleistung zu erreichen, dürfen die Abmessungen einer solchen Lüftereinheit nicht zu klein sein; je breiter und höher jedoch die Lüftereinheit ist, umso mehr behindert sie die Sicht des Fahrers auf eine vor dem Traktor liegende zu befahrende Fläche und/oder auf vorn am Traktor montierte Werkzeuge. Solche Werkzeuge können überdies den Zutritt der Frischluft zu Lufteinlassöffnungen an der Stirnseite behindern. Je näher am Boden diese Lufteinlassöffnungen angeordnet sind, umso größer ist die Menge an Schmutz, der mit der Frischluft ins Innere des Gehäuses eingetragen wird.

EP 1 496 214 A1 offenbart einen Traktor, bei dem eine Lüftereinheit abweichend von der oben beschriebenen herkömmlichen Anordnung liegend unter einer Decke des Motorgehäuses eingebaut ist und einen aufwärts gerichteten Luftstrom durch ein den Motor aufnehmendes Gehäuse antreibt. Lufteinlassöffnungen des Gehäuses sind bodennah angeordnet und dadurch einer starken Schmutzbelastung, insbesondere durch von Vorderrädern des Traktors bei ihrer Drehung mitgenommene Bodenpartikel, ausgesetzt.

Aus der EP 2 757 233 A1 ist weiterhin eine Kühlungsanordnung für einen Traktor bekannt, die eine Luftfördereinrichtung zur Erzeugung eines Kühlluftvolumenstroms sowie einen der Luftfördereinrichtung ansaugseitig mittels einer Ansaughutze vorgeschalteten luftgekühlten Motorwärmetauscher umfasst. Ein luftgekühlter Ladeluftkühler ist mit der Ansaughutze derart verbunden, dass sich aufgrund eines mittels der Luftfördereinrichtung in der Ansaughutze erzeugbaren Unterdrucks ein durch den Ladeluftkühler hindurchtretender Nebenkühlluftvolumenstrom hervorrufen lässt. Dem Ladeluftkühler ist ansaugseitg eine weitere Luftfördereinrichtung in Gestalt eines Axialstromlüfters vorgeschaltet, die der Unterstützung der Erzeugung des Nebenkühlluftvolumenstroms dient.

Aus US 4432309 A1 ist ein Rasentraktor bekannt, dessen Motor durch einen mittels einer Lüftereinheit über den Motorblock geleiteten Luftstrom gekühlt ist. Die Lüftereinheit ist über dem Motorblock montiert, um Kühlluft von oben nach unten über den Motorblock zu leiten. Ein Gehäuse, dass den Motor und die Lüftereinheit umgibt, hat eine Lufteinlassöffnung in Bodennähe, unterhalb der Lüftereinheit und einen Zuluftkanal, der sich von der Lufteinlassöffnung zu einer Saugseite der Lüftereinheit erstreckt, so dass auch hier die Belastung der Lüftereinheit durch vom Boden aufgewirbelten Schmutz hoch ist. Die Bauhöhe des Gehäuses, die sich durch die Anbringung der Lüftereinheit auf dem Motor und die Notwendigkeit, über der Lüftereinheit Platz für den Zuluftkanal freizuhalten, führt nur deswegen nicht zu einer empfindlichen Einschränkung der freien Sicht des Fahrers, weil der Rasentraktor insgesamt wesentlich kleiner als ein normaler Traktor für den Feldeinsatz ist.

Bei Arbeitsmaschinen wie Mähdreschern oder Feldhäckslern, die im Einsatz stets mit einem ausladenden vorgebauten Erntevorsatz versehen sind, ist eine Fahrerkanzel meist weit vorn an der Arbeitsmaschine montiert, um dem Fahrer freien Blick auf den Erntevorsatz zu gewähren, und ein Motorgehäuse ist hinter der Fahrerkanzel angeordnet. An der Stirnseite der Maschine ist daher in der Regel weder ausreichend Platz für Lufteinlassöffnungen, noch wären solche Öffnungen für eine aerodynamisch effiziente Versorgung des Motorgehäuses zweckmäßig. DE 10 2009 023 771 A1 offenbart daher einen Mähdrescher, bei dem eine Lüftereinheit oben auf einem Motor und Dreschwerk aufnehmenden Gehäuse montiert ist und einen Kühler sowie einzelnen Axiallüfter von großem Durchmesser umfasst, der angeordnet ist, um Luft von oben her durch den Kühler zu drücken.

Aufgabe der vorliegenden Erfindung ist, eine landwirtschaftliche Maschine zu schaffen, bei der eine Lüftereinheit die freie Sicht eines Fahrers auf eine vor der Maschine liegende Bodenfläche möglichst wenig behindert und gleichzeitig die Belastung der Lüftereinheit durch angesaugten Schmutz gering gehalten werden kann.

Die Aufgabe wird gelöst, indem bei einer landwirtschaftlichen Arbeitsmaschine mit einem Fahrgestell, einem Motor, wenigstens einem Zusatzaggregat und einer Lüftereinheit, die in einem gemeinsamen Motorgehäuse auf dem Fahrgestell montiert sind, wobei die Lüftereinheit vor dem Motor angeordnet und vorgesehen ist, um in einem Normalbetriebsmodus das Zusatzaggregat und den Motor zu kühlen, die Lüftereinheit über dem Zusatzaggregat angeordnet und in dem Normalbetriebsmodus von oben nach unten durchströmt ist.

Die Lüftereinheit hat drei Abmessungen in zueinander orthogonalen Richtungen, von denen üblicherweise diejenige in Strömungsrichtung die kleinste ist. Deswegen ist die mögliche Einschränkung des Gesichtsfeldes des Fahrers durch die Lüftereinheit gering, selbst dann, wenn die anderen Abmessungen ein Vielfaches der Abmessung in Strömungsrichtung betragen. Indem die Lüftereinheit vor dem Motor platziert ist, können beide aus der Blickrichtung des Fahrers auf einer Linie liegen, was die Einschränkung des Gesichtsfeldes weiter vermindert. Indem die Lüftereinheit über einem Zusatzaggregat platziert wird, kann verhindert werden, dass die Lüftereinheit eine Vergrößerung der Abmessungen des Gehäuses nötig macht.

Die Orientierung der Lüftereinheit mit im Wesentlichen vertikaler Ausrichtung der Luftströmung erlaubt es, eine Lüftereinheit unterzubringen, von der eine Abmessung größer ist als die Höhe einer Stirnwand des Motorgehäuses.

Um die Ansaugung von Schmutz zu minimieren, kann eine Lufteinlassöffnung des Motorgehäuses oberhalb der Lüftereinheit angeordnet sein.

Wenn eine mittlere Blasrichtung der Lüftereinheit abwärts und gleichzeitig entgegen der Fahrtrichtung orientiert ist, kann der dem Fahrer zugewandte Querschnitt der Lüftereinheit und die Einschränkung seines Gesichtsfeldes minimiert werden.

Insbesondere sollten hierfür eine Oberseite der Lüftereinheit und eine dieser gegenüberliegende Decke des Motorgehäuses in Fahrzeuglängsrichtung nach vorn abschüssig sein.

Eine Luftauslassöffnung des Motorgehäuses ist vorzugsweise angeordnet, um außerhalb des Motorgehäuses einen Luftvorhang zwischen einem Bodeneingriffsmittel der Arbeitsmaschine wie etwa einem Rad oder einem Raupenfahrwerk einerseits und einer Lufteinlassöffnung des Motorgehäuses oder einer Fahrerkanzel andererseits zu erzeugen und auf diese Weise aufgewirbelten Schmutz von der Lufteinlassöffnung oder der Fahrerkanzel fernzuhalten.

Zu diesem Zweck kann sich die Luftauslassöffnung insbesondere am Motorgehäuse oberhalb des Bodeneingriffsmittels erstrecken oder zwischen einem vorderen und einem hinteren Bodeneingriffsmittel angeordnet sein, um von der Dreh- oder Umlaufbewegung des vorderen Bodeneingriffsmittels mitgerissenen Schmutz von der Maschine fortzulenken.

An der Arbeitsmaschine kann eine Kupplung für die Montage eines Zusatzaggregats vor dem Motorgehäuse vorgesehen sein. Da eine Stirnwand des Motorgehäuses von Lufteinlassöffnungen frei gehalten werden kann, wird die Frischluftzufuhr zum Motorgehäuse durch ein solches Zusatzaggregat nicht beeinträchtigt, selbst wenn dieses dicht vor der Stirnwand platziert ist und diese zu einem großen Teil überdeckt.

Um bei geringer Abmessung in Strömungsrichtung einen großen durchströmten Querschnitt realisieren zu können, kann die Lüftereinheit eine Mehrzahl von jeweils strömungstechnisch parallel angeordneten Lüftern, insbesondere Axiallüftern, umfassen.

Ein mit Kühlflüssigkeit vom Motor gespeister Kühler kann Teil der Lüftereinheit und insbesondere deren Lüfter(n) in Strömungsrichtung vor- oder nachgelagert sein.

Neben dem bereits erwähnten Normalbetriebsmodus kann die Lüftereinheit einen Reinigungsbetriebsmodus unterstützen, in dem die Strömungsrichtung der Luft durch die Lüftereinheit entgegengesetzt zur Strömungsrichtung des Normalbetriebsmodus ist. Durch die Umkehrung der Strömungsrichtung kann im Normalbetriebsmodus abgelagerter Schmutz gelockert oder gelöst werden.

Um Schmutzablagerung an ungünstigen Stellen zu verhindern, kann die Arbeitsmaschine einen Luftfilter aufweisen, der von einem von der Lüftereinheit angetriebenen Luftstrom durchströmt ist. Insbesondere zur Reinigung dieser Luftfilter ist der Reinigungsbetriebsmodus sinnvoll.

Als Zusatzaggregat, das den Platz unter der Lüftereinheit im Motorgehäuse einnimmt, ist erfindungsgemäß eine Abgasnachbehandlungsanlage zur Nachbehandlung von Abgas des Motors vorgesehen.

Die landwirtschaftliche Arbeitsmaschine ist vorzugsweise ein Traktor oder eine Arbeitsmaschine mit hinter dem Motorgehäuse angeordneter Fahrerkanzel.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen stark schematisierte Seitenansicht einer landwirtschaftliche Arbeitsmaschine gemäß einer ersten Ausgestaltung der Erfindung;
- Fig. 2: ein Detail der ersten Ausgestaltung;
- Fig. 3: einen Schnitt durch eine landwirtschaftliche Arbeitsmaschine gemäß einer zweiten Ausgestaltung; und
- Fig. 4: einen zu Fig. 1 analoge Ansicht gemäß einer dritten Ausgestaltung

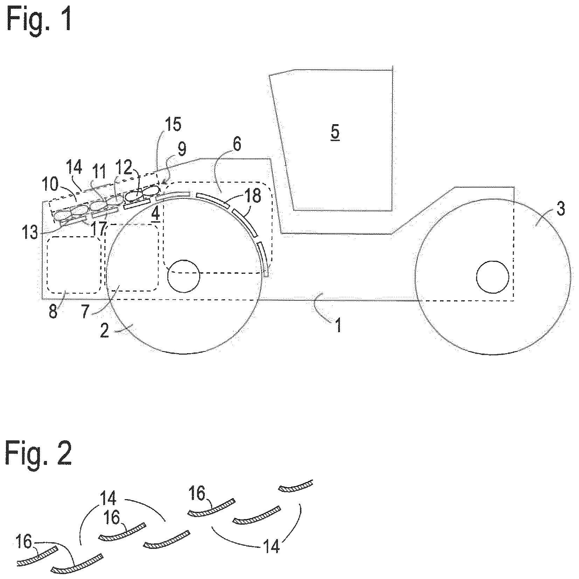

Fig. 1 zeigt als erste Ausgestaltung der Erfindung einen Traktor von an sich bekanntem äußerem Erscheinungsbild, mit einem Fahrgestell 1, an dem Vorderräder 2 und Hinterräder 3 montiert sind, einem Motorgehäuse 4, das auf dem Fahrgestell montiert und beiderseits von oberen Bereichen der beiden Vorderräder 2 flankiert ist, und einer Fahrerkanzel 5, die in Fahrtrichtung hinter dem Motorgehäuse 4 platziert ist, so dass der Fahrer nach vorn über das Motorgehäuse 4 hinweg blickt.

Das Motorgehäuse 4 beherbergt einen Antriebsmotor 6, typischerweise einen Dieselmotor, sowie ein Zusatzaggregat 7, 8, im hier gezeigten Fall eine Abgasnachbereitungseinheit 7, der die Abgase des Antriebsmotors 6 zugeführt werden, um ihnen Schadstoffe wie etwa Ruß oder Stickoxide zu entziehen. Alternativ oder ergänzend können als Zusatzaggregate z.B. ein Kraftstofftank 8 oder ein Stellantrieb zum Anheben eines vorn am Traktor montierten, in der Fig. nicht dargestellten Arbeitswerkzeugs vorgesehen sein.

Das wenigstens eine Zusatzaggregat 7, 8 ist im Motorgehäuse 4 vor dem Antriebsmotor 6 untergebracht und hat eine kleinere vertikale Abmessung als letzterer, so dass über dem Zusatzaggregat 7, 8 und vor dem Antriebsmotor 6 Platz zur Unterbringung einer Lüftereinheit 9 vorhanden ist. Die Lüftereinheit 9 umfasst in an sich bekannter Weise einen Kühler 10, der von Kühlwasser des Antriebsmotors 6 durchströmt ist, und eine Lüfterbaugruppe 11, die wenigstens einen, vorzugsweise mehrere, Lüfter zum Antreiben eines Luftstroms durch den Kühler 10 umfasst. Der Kühler ist in im Wesentlichen liegender Orientierung eingebaut, d.h. von seinen drei Abmessungen in zueinander orthogonalen Richtungen verlaufen die beiden längsten im Wesentlichen horizontal.

Genauer gesagt verläuft in der hier betrachteten Ausgestaltung die längste Abmessung des in etwa quaderförmigen Kühlers 10 in einer zur Fahrzeugquerrichtung senkrechten (und zur Schnittebene der Fig. 1 parallelen) Ebene unter einem Winkel gegen die Horizontale von nicht mehr als 30°, und die zweitlängste verläuft in der Fahrzeugquerrichtung. Die kürzeste Abmessung (die gleichzeitig die Richtung ist, in der im Betrieb Luft durch den Kühler 10 strömt, verläuft in der oben genannten Ebene orthogonal zur längsten Abmessung, d.h. die beiden größten Außenseiten des Kühlers bilden jeweils eine Lufteinlass- bzw. -auslassfläche.

Die Lüfterbaugruppe 11 hat wie der Kühler 10 die Gestalt eines flachen Quaders, der parallel zum Kühler 10 angeordnet ist, so dass jeweils eine Lufteinlassfläche des einen einer Luftauslassfläche des anderen eng benachbart gegenüberliegt. Ein einzelner Axiallüfter von an sich bekannter Bauart kann den gesamten Querschnitt der Lüfterbaugruppe 11 ausfüllen, bevorzugt ist jedoch eine Anordnung von mehreren Axiallüftern nebeneinander, z. B. eine Matrixanordnung mit 2x3 Axiallüftern 12, um eine Lüfterbaugruppe 11 bilden zu können, bei der sich die längste und die zweitlängste Abmessung voneinander unterscheiden. Drehachsen 13 der Axiallüfter 12 sind jeweils in Richtung der kürzesten Abmessung der Lüfterbaugruppe 11 orientiert, um Luft in Richtung dieser kürzesten Abmessung durch die Lüfterbaugruppe 11 hindurchzufördern.

In der Darstellung der Fig. 1 ist der Kühler 10 bezogen auf die Strömungsrichtung der hindurchgeförderten Luft stromaufwärts von der Lüfterbaugruppe 11 angeordnet; eine gegenteilige Anordnung, d.h. ein stromabwärts von der Lüfterbaugruppe 11 angeordneter Kühler 10, kommt jedoch auch in Betracht.

Die liegende Anordnung ermöglicht die Unterbringung einer großformatigen und dementsprechend leistungsstarken Lüftereinheit 9, insbesondere kann die größte Abmessung der Lüftereinheit 9 größer sein als die Höhe des Motorgehäuses 4, ohne dass dies die freie Sicht des Fahrers beeinträchtigt.

Lufteinlassöffnungen 14, über die die Lüftereinheit 9 Frischluft in das Motorgehäuse 4 saugt, sind einer Lufteinlassfläche der Lüftereinheit 9, hier der Lufteinlassfläche des Kühlers 10, gegenüberliegend in einer Decke 15 des Motorgehäuses 4 vorgesehen. Entsprechend der geneigten Anordnung der Lüftereinheit 9 ist hier die Decke 15 nach vorn abschüssig, um das Ausmaß, in dem das Motorgehäuse 6 die Sicht des Fahrers auf den vor dem Traktor liegenden Boden einschränkt, zu minimieren.

Die Lufteinlassöffnungen 14 können wie in Fig. 2 skizziert Schlitze zwischen in zwei Ebenen angeordneten Stegen 16 sein, wobei die Stege 16 einer Ebene jeweils mit den Schlitzen der anderen Ebene überlappen, um einen direkten Durchtritt von Niederschlagswasser zu verhindern. Die Stege 16 können einen rinnenförmigen Querschnitt haben, um aufgefangenen Niederschlag seitwärts ab-zuleiten.

Die von der Lüftereinheit 9 angesaugte Frischluft wird in Richtung der Drehachsen 13, im hier betrachteten Fall schräg abwärts und entgegen der Fahrtrichtung, ins Innere des Motorgehäuses 4 geblasen. Die Abgasnachbereitungseinheit 7 ist in Verlängerung der Drehachsen 13 platziert, um von dem Luftstrom voll getroffen zu werden.

Luftauslassöffnungen 17 sind an Seitenwänden des Motorgehäuses 4 so platziert, dass der von ihnen außerhalb des Motorgehäuses 4 erzeugte Luftstrom die Räder 2, 3 umgeht, um keinen an den Rädern 2, 3 haftenden Schmutz aufzuwirbeln. Im Fall der Fig. 1 ist wenigstens ein Teil der Luftauslassöffnungen 17 entlang einer Linie platziert, die entlang der Seitenwände des Motorgehäuses 4 bis zu einem Scheitelpunkt über einer Achse der Vorderräder ansteigt. Der schräge Verlauf gewährleistet, dass auch wenn die an den Luftauslassöffnungen 17 austretende Luft durch den Fahrtwind nach hinten abgelenkt wird, sie an den Rädern 2 im Wesentlichen ohne umgelenkt zu werden, vorbeiströmt und dadurch keinen Staub von den Rädern 2 aufnimmt. Der von den Luftauslassöffnungen 17 erzeugte Luftstrom ist insbesondere wirksam, um von den Rädern aufgewirbelten Schmutz von den Lufteinlassöffnungen 14 fernzuhalten und so die Staubbelastung im Innern des Motorgehäuses 4 zu vermindern.

Der Weg der Luft im Innern des Motorgehäuses 4 zu den Luftauslassöffnungen 17 ist kurz, so dass ein bei geringer Leistung der Lüftereinheit ein kräftiger Luftstrom aufrecht erhalten werden kann.

Weitere Luftauslassöffnungen 18 können sich zwischen einer hinteren Flanke der Vorderräder 2 und der Fahrerkanzel 5, hier z.B. entlang eines um die Flanke verlaufenden Bogens, erstrecken, so dass über sie austretende Luft, wenn sie vom Fahrtwind nach hinten abgelenkt wird, einen Vorhang zwischen dem Boden und der Fahrerkanzel 5 bildet und Schmutz mitnimmt, der während der Fahrt von den Rädern vom Boden hochgerissen wird. So kann dieser Schmutz die Fahrerkanzel 5 nicht erreichen, und die Atemluft des Fahrers bleibt arm an Staub.

Auf den Weg zu den Luftauslassöffnungen 17 und insbesondere 18 strömt die Luft im Motorgehäuse 4 am Antriebsmotor 6 vorbei und kann diesen somit ergänzend zur Wirkung des Kühlers 10 auch direkt kühlen.

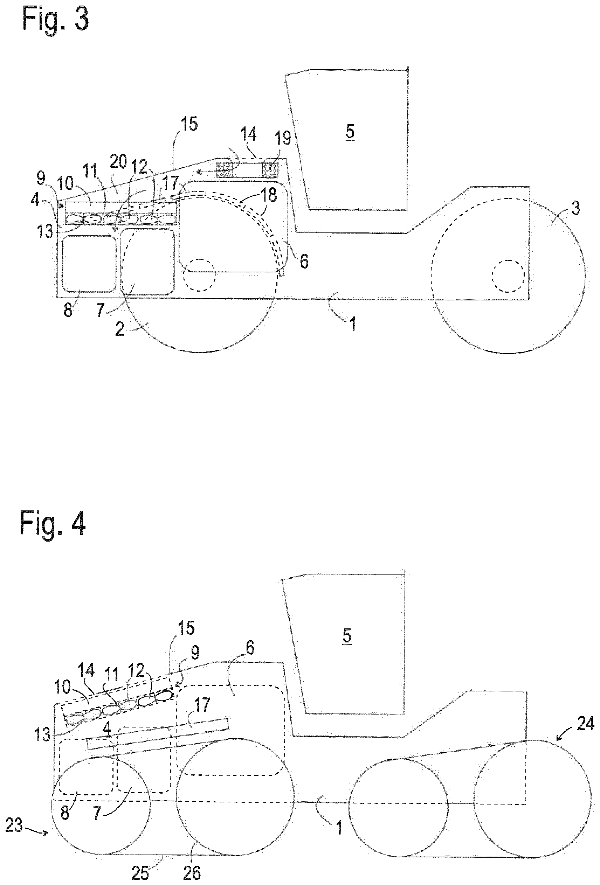

Einer in Fig. 3 gezeigten Abwandlung zufolge ist ein Luftfilter 19 im Motorgehäuse 4 über dem Antriebsmotor 4 angeordnet, und der Weg der Frischluft durch das Motorgehäuse verläuft von Lufteinlassöffnungen 14, die in der Decke 15 über dem Luftfilter 19 gebildet sind, durch den Luftfilter 19 zur Lüftereinheit 9. Um die Lüftereinheit 9 auf ihrem gesamten Querschnitt gleichmäßig mit Luft zu versorgen, kann ein Zwischenraum 20 zwischen der Decke 15 und der Einlassseite der Lüftereinheit 9 vom Luftfilter 19 aus nach vorn keilförmig verengt sein. Im hier gezeigten Fall ist die Keilform des Zwischenraums 20 dadurch erreicht, dass die Lüftereinheit 9 horizontal eingebaut ist, die darüber verlaufende Decks 15 des Motorgehäuses 4 aber wie in Fig. 1 nach vorn abschüssig ist. In Fig. 3 nicht sichtbare Kanäle verbinden im Innern des Motorgehäuses 4 den Zwischenraum zwischen der Unterseite der Lüfterbaugruppe 11 und den Aggregaten 7, 8 mit den zum Teil darüber gelegenen Luftaustrittsöffnungen 17, 18.

Da die von der Lüftereinheit 9 in das Motorgehäuse 4 eingeblasene Luft durch den Luftfilter 19 von Staub befreit ist, kann, indem diese Luft an allen Fugen des Motorgehäuses 4 entweicht, das Vordringen von Staub in das Motorgehäuse 4 verhindert werden. Eine Beeinträchtigung der Wärmeabgabe durch im Betrieb heiße Oberflächen durch darauf haftenden Staub oder gar eine Brandgefahr können so vermieden werden.

Staub, der sich bei normalem Betrieb an einer stromaufwärtigen Seite des Luftfilters 19 sammelt, kann von dort wieder beseitigt werden, indem eine Steuereinheit von Zeit zu Zeit die Strömungsrichtung der Lüftereinheit 9 umkehrt und so zeitweilig einen Druck am Luftfilter 19 erzeugt, der den Staub vom Filter 19 fortdrückt. Dies kann z.B. jeweils nach Verstreichen einer vorgegebenen Betriebszeit der Lüftereinheit 9 erfolgen, oder wenn der Druckabfall am Luftfilter 19, abgeschätzt z.B. anhand der zum Aufrechterhalten einer gewünschten Lüfterdrehzahl erforderlichen Antriebsleistung, einen Grenzwert übersteigt.

Durch die Orientierung der Lüftereinheit 9 ist hier auch ein Antriebsaggregat 21 dem Frischluftstrom ausgesetzt, das unmittelbar hinter einer Stirnwand 22 des Motorgehäuses 4 angeordnet ist und zum Anheben eines zeitweilig vor der Stirnwand 22 montierten Arbeitswerkzeugs, Ballastgewichts, Zusatztanks oder dergleichen dient. So kann einer Überhitzung des Antriebsaggregats 21 auch bei länger währendem Gebrauch vorgebeugt werden.

Einer in Fig. 4 gezeigten Variante zufolge sind die Räder 2, 3 der Ausgestaltung von Fig. 1 durch Raupenfahrwerke 23, 24 ersetzt. Um von deren umlaufenden Bändern 25 aufgewirbelten Schmutz von der Fahrerkanzel 5 und /oder den Lufteinlassöffnungen 14 fernzuhalten, genügen Luftaustrittsöffnungen 17, die sich über einem oberen Trum der Bänder 25 erstrecken und dabei niedriger liegen als die Fahrerkanzel 5.

### Bezugszeichenliste

- 1: Fahrgestell
- 2: Vorderrad
- 3: Hinterrad
- 4: Motorgehäuse
- 5: Fahrerkanzel
- 6: Antriebsmotor
- 7: Zusatzaggregat (Abgasnachbereitungseinheit)
- 8: Zusatzaggregat (Kraftstofftank)
- 9: Lüftereinheit
- 10: Kühler
- 11: Lüfterbaugruppe
- 12: Axiallüfter
- 13: Drehachse
- 14: Lufteinlassöffnung
- 15: Decke
- 16: Steg
- 17: Luftauslassöffnung
- 18: Luftauslassöffnung
- 19: Luftfilter
- 20: Zwischenraum
- 21: Antriebsaggregat
- 22: Stirnwand
- 23: Raupenfahrwerk
- 24: Raupenfahrwerk
- 25: Band
- 26: hinteres Rad

## Patentansprüche

1. Landwirtschaftliche Arbeitsmaschine mit einem Fahrgestell (1), einem Motor (6), wenigstens einem Zusatzaggregat (7, 8, 21) und einer Lüftereinheit (9), die in einem gemeinsamen Motorgehäuse (4) auf dem Fahrgestell (1) montiert sind, wobei die Lüftereinheit (9) vor dem Motor (6) angeordnet und vorgesehen ist, um in einem Normalbetriebsmodus Frischluft in das Motorgehäuse (4) einzuspeisen, **dadurch gekennzeichnet, dass** die Lüftereinheit (9) über dem Zusatzaggregat (7, 8, 21) angeordnet und in dem Normalbetriebsmodus von oben nach unten durchströmt ist, wobei das Zusatzaggregat eine Abgasnachbehandlungsanlage (7) umfasst.

2. Landwirtschaftliche Arbeitsmaschine nach Anspruch 1, **dadurch gekennzeichnet, dass** wenigstens eine Abmessung der Lüftereinheit (9) größer ist als die Höhe des Motorgehäuses (4).

3. Landwirtschaftliche Arbeitsmaschine nach Anspruch 1 oder 2, **dadurch gekennzeichnet, dass** eine Lufteinlassöffnung (14) des Motorgehäuses (4) oberhalb der Lüftereinheit (9) angeordnet ist.

4. Landwirtschaftliche Arbeitsmaschine nach einem der vorhergehenden Ansprüche, **dadurch gekennzeichnet, dass** eine mittlere Blasrichtung der Lüftereinheit (9) abwärts und gleichzeitig entgegen der Vorwärtsfahrtrichtung orientiert ist.

5. Landwirtschaftliche Arbeitsmaschine nach einem der vorhergehenden Ansprüche, **dadurch gekennzeichnet, dass** eine Oberseite der Lüftereinheit (9) und eine dieser gegenüberliegende Decke (15) des Motorgehäuses (4) in Fahrzeuglängsrichtung nach vorn abschüssig sind.

6. Landwirtschaftliche Arbeitsmaschine nach einem der vorhergehenden Ansprüche, **dadurch gekennzeichnet, dass** eine Luftauslassöffnung (17, 18) des Motorgehäuses (4) angeordnet ist, um außerhalb des Motorgehäuses (4) einen Luftvorhang zwischen einem Bodeneingriffsmittel (2, 3, 23, 24) der Arbeitsmaschine einerseits und einer Lufteinlassöffnung (14) des Motorgehäuses oder einer Fahrerkanzel (5) andererseits zu erzeugen.

7. Landwirtschaftliche Arbeitsmaschine nach Anspruch 6, **dadurch gekennzeichnet, dass** die Luftauslassöffnung (17, 18) sich am Motorgehäuse (4) oberhalb des Bodeneingriffsmittels (2, 23) erstreckt oder zwischen einem vorderen und einem hinteren Bodeneingriffsmittel (2, 3; 23, 24) angeordnet ist.

8. Landwirtschaftliche Arbeitsmaschine nach einem der vorhergehenden Ansprüche, **dadurch gekennzeichnet, dass** sie eine Kupplung für die Montage eines Gegenstands vor dem Motorgehäuse (4) aufweist.

9. Landwirtschaftliche Arbeitsmaschine nach einem der vorhergehenden Ansprüche, **dadurch gekennzeichnet, dass** die Lüftereinheit (9) eine Mehrzahl von jeweils strömungstechnisch parallel angeordneten Lüftern, insbesondere Axiallüftern (12), umfasst.

10. Landwirtschaftliche Arbeitsmaschine nach einem der vorhergehenden Ansprüche, **dadurch gekennzeichnet, dass** die Lüftereinheit (9) einen mit Kühlflüssigkeit vom Motor (6) gespeisten Kühler (10) umfasst.

11. Landwirtschaftliche Arbeitsmaschine nach einem der vorhergehenden Ansprüche, **dadurch gekennzeichnet, dass** die Strömungsrichtung der Luft durch die Lüftereinheit (9) in einem Reinigungsbetriebsmodus entgegengesetzt zur Strömungsrichtung des Normalbetriebsmodus ist.

12. Landwirtschaftliche Arbeitsmaschine nach einem der vorhergehenden Ansprüche, **dadurch gekennzeichnet, dass** sie einen Luftfilter (19) aufweist, der von einem von der Lüftereinheit (9) angetriebenen Luftstrom durchströmt ist.

13. Landwirtschaftliche Arbeitsmaschine nach einem der vorhergehenden Ansprüche, **dadurch gekennzeichnet, dass** sie eine Fahrerkanzel (5) hinter dem Motorgehäuse (4) aufweist.

## Claims

1. An agricultural working machine with a chassis (1), an engine (6), at least one additional assembly (7, 8, 21) and a cooling fan unit (9), which are mounted on the chassis (1) in a common engine housing (4), wherein the cooling fan unit (9) is disposed in front of the engine (6) and is provided in order, in a normal operational mode, to feed fresh air into the engine housing (4) **characterized in that** the cooling fan unit (9) is disposed over the additional assembly (7, 8, 21) and is perfused from top to bottom in the normal operational mode, wherein the additional assembly comprises an exhaust gas post-treatment unit (7).

2. The agricultural working machine according to claim 1, **characterized in that** at least one dimension of the cooling fan unit (9) is larger than the height of the engine housing (4).

3. The agricultural working machine according to claim 1 or claim 2, **characterized in that** an air inlet opening (14) of the engine housing (4) is disposed above the cooling fan unit (9).

4. The agricultural working machine according to one of the preceding claims, **characterized in that** an average blowing direction of the cooling fan unit (9) is orientated backwards and simultaneously against the forwards direction of travel.

5. The agricultural working machine according to one of the preceding claims, **characterized in that** a top of the cooling fan unit (9) and a cover (15) of the engine housing (4) facing it slope forwards in the longitudinal direction of the vehicle.

6. The agricultural working machine according to one of the preceding claims, **characterized in that** an air outlet opening (17, 18) of the engine housing (4) is disposed in order to produce a curtain of air outside the engine housing (4) between a ground engaging means (2, 3, 23, 24) of the working machine on the one hand and an air inlet opening (14) of the engine housing or a driver's cabin (5) on the other hand.

7. The agricultural working machine according to claim 6, **characterized in that** the air outlet opening (17, 18) extends above the ground engaging means (2, 23) on the engine housing (4) or is disposed between a front and a rear ground engaging means (2, 3; 23, 24).

8. The agricultural working machine according to one of the preceding claims, **characterized in that** it has a coupling for mounting an object in front of the engine housing (4).

9. The agricultural working machine according to one of the preceding claims, **characterized in that** the cooling fan unit (9) comprises a plurality of radiators, in particular axial radiators (12), which are respectively disposed in a fluidically parallel manner.

10. The agricultural working machine according to one of the preceding claims, **characterized in that** the cooling fan unit (9) comprises a radiator (10) supplied with cooling fluid from the engine (6).

11. The agricultural working machine according to one of the preceding claims, **characterized in that** the direction of flow of the air through the cooling fan unit (9) in a cleaning operational mode is opposite to the direction of flow in the normal operational mode.

12. The agricultural working machine according to one of the preceding claims, **characterized in that** it has an air filter (19) through which a flow of air driven by the cooling fan unit (9) flows.

13. The agricultural working machine according to one of the preceding claims, **characterized in that** it has a driver's cabin (5) behind the engine housing (4).

## Revendications

1. Machine de travail agricole comprenant un châssis (1), un moteur (6), au moins un organe supplémentaire (7, 8, 21) et une unité de ventilation (9), lesquels sont montés sur le châssis (1) dans un carter-moteur commun (4), l'unité de ventilation (9) étant disposée devant le moteur (6) et prévue pour amener de l'air frais dans le carter-moteur (4) dans un mode de fonctionnement normal, **caractérisée en ce que** l'unité de ventilation (9) est disposée au-dessus de l'organe supplémentaire (7, 8, 21) et est parcourue du haut vers le bas dans le mode de fonctionnement normal, l'organe supplémentaire incluant une installation de post-traitement de gaz d'échappement (7).

2. Machine de travail agricole selon la revendication 1, **caractérisée en ce qu'**au moins une dimension de l'unité de ventilation (9) est supérieure à la hauteur du carter-moteur (4).

3. Machine de travail agricole selon la revendication 1 ou 2, **caractérisée en ce qu'**une ouverture d'admission d'air (14) du carter-moteur (4) est disposée au-dessus de l'unité de ventilation (9).

4. Machine de travail agricole selon une des revendications précédentes, **caractérisée en ce qu'**une direction de soufflage moyenne de l'unité de ventilation (9) est orientée vers le bas et simultanément à l'opposé du sens de marche avant.

5. Machine de travail agricole selon une des revendications précédentes, **caractérisée en ce qu'**un dessus de l'unité de ventilation (9) et un couvercle (15), situé en face de celle-ci, du carter-moteur (4) sont en pente vers l'avant dans la direction longitudinale du véhicule.

6. Machine de travail agricole selon une des revendications précédentes, **caractérisée en ce qu'**une ouverture de sortie d'air (17, 18) du carter-moteur (4) est prévue pour générer à l'extérieur du carter-moteur (4) un rideau d'air entre un moyen de prise au sol (2, 3, 23, 24) de la machine de travail d'une part et une ouverture d'admission d'air (14) du carter-moteur ou une cabine de conduite (5) d'autre part.

7. Machine de travail agricole selon la revendication 6, **caractérisée en ce que** l'ouverture de sortie d'air (17, 18) s'étend dans le carter-moteur (4) au-dessus du moyen de prise au sol (2, 23) et est disposée entre un moyen de prise au sol avant et arrière (2, 3 ; 23, 24).

8. Machine de travail agricole selon une des revendications précédentes, **caractérisée en ce qu'**elle comporte un accouplement pour le montage d'un objet devant le carter-moteur (4).

9. Machine de travail agricole selon une des revendications précédentes, **caractérisée en ce que** l'unité de ventilation (9) inclut une pluralité de ventilateurs, en particulier de ventilateurs axiaux (12), disposés respectivement parallèlement en termes d'écoulement.

10. Machine de travail agricole selon une des revendications précédentes, **caractérisée en ce que** l'unité de ventilation (9) inclut un refroidisseur (10) alimenté par le moteur (6) en liquide de refroidissement.

11. Machine de travail agricole selon une des revendications précédentes, **caractérisée en ce que** la direction d'écoulement de l'air à travers l'unité de ventilation (9) dans un mode de fonctionnement de nettoyage est opposée à la direction d'écoulement du mode de fonctionnement normal.

12. Machine de travail agricole selon une des revendications précédentes, **caractérisée en ce qu'**elle comporte un filtre à air (19) qui est parcouru par un courant d'air entraîné par l'unité de ventilation (9).

13. Machine de travail agricole selon une des revendications précédentes, **caractérisée en ce qu'**elle comporte une cabine de conduite (5) derrière le carter-moteur (4).
